# EUROPEAN PATENT SPECIFICATION

(11) **EP 3 964 546 B1**
(45) Date of publication and mention of the grant of the patent: **01.05.2024**
(21) Application number: 20798391.7
(22) Date of filing: 09.04.2020
(51) Int. Cl.: C08K 5/17, C08L 15/02, C08L 61/06, C09K 3/14, C08J 5/14, F16D 69/00, F16D 69/02

(54) **DISC BRAKE PAD UNDERLAYER COMPOSITION AND DISC BRAKE PAD USING SAME**
UNTERSCHICHTZUSAMMENSETZUNG EINES SCHEIBENBREMSBELAGS UND DEREN VERWENDUNG IN EINEM SCHEIBENBREMSBELAG
COMPOSITION DE SOUS-COUCHE DE PLAQUETTE DE FREIN À DISQUE ET PLAQUETTE DE FREIN À DISQUE L'UTILISANT

(30) Priority: 27.04.2019 JP 2019086915
(43) Date of publication of application: 09.03.2022
(73) Proprietor: Nisshinbo Brake Inc., Chuo-ku Tokyo 103-8650 (JP)
(72) Inventor: KIMURA, Eiji, Oura-gun Gunma 370-0614 (JP)
(74) Representative: Stolmár & Partner Patentanwälte PartG mbB
(86) International application number: PCT/JP2020/015921
(87) International publication number: WO 2020/222294

(56) References cited:
- WO-A1-2014/007130
- CN-A- 105 038 102
- JP-A- H0 942 336
- JP-A- 2000 161 406
- JP-A- 2007 154 154
- JP-A- 2015 218 808
- JP-A- 2015 218 808
- US-A1- 2009 011 962

## Description

### [Field of Invention]

This invention relates to an underlayer composition for a disc brake pad and a disc brake pad using the underlayer composition.

### [Background of Technology]

Conventionally, a disc brake is used as a brake device for passenger cars, and a disc brake pad, which has a back plate and a friction material affixed on the back plate, is used as a friction member of the disc brake.

In the disc brake pad, for the purpose of suppressing a brake noise during braking, a vibration absorption layer, so-called an underlayer (or an insulator) is sometime provided between the back plate and the friction material.

US20090119962A relates to a friction material for use as a disc brake pad and a brake lining for automobiles, wherein said material comprises fluororubber however no uncrosslinked fluororubber.

Patent Document 1 (Japanese Provisional Patent Publication No. 1993-331452) discloses a non-asbestos friction material with a good brake noise suppression performance, which is based on the friction material that contains a fiber component other than asbestos, a thermosetting resin component such as a phenol resin, a graphite, and a powdered filler component such as a barium sulfide. The non-asbestos friction material has two friction material layers both parallel to a friction surface, both of which have at least one different friction material component or have different content ratios (percentages) and contains 10-30 volume % or more of a rubber particle (e.g., such as a nitrile rubber and an isoprene rubber in the examples) relative to the entire amount of the friction material layer which is one of the two friction material layers and contacts with the back plate.

Also, there is a known technology for pre-granulating a raw material composition (hereinunder, "underlayer composition") in order to facilitate a handling of raw materials during manufacturing the disc brake pad and to reduce the dust generation during the manufacturing operation.

Patent Document 2 (Japanese Provisional Patent Publication No. 1995-301265) discloses a manufacturing method for a disc brake pad having a step of feeding a raw friction material, which is a mixture of a reinforcing fiber, an inorganic filler, an inorganic filler, and a binder resin, in a cavity made between a metal die and a pad back plate in several times so that multiple layers are made in a thikness direction of the friction material and an adhesion layer, which is one of the multiple layers and contacts with the back plate, becomes a granulation material, a step of heat-press forming the raw friction material including the granulation material in the cavity, and a step of heat-curing the heat-press formed friction material.

In Patent Document 2, either one of a styrene-butadiene rubber, an acrylonitrile-butadiene rubber, an acrylic rubber, a butyl rubber, or an isoprene rubber is added in the organic filler as a granulation material.

If a rubber component, e.g., such as an uncrosslinked styrene-butadiene rubber, an acrylonitrile-butadiene rubber, an acrylic rubber, an isoprene rubber, or a butadiene rubber, is contained in the composition of the granulation material, the rubber component is heated to soften so as to make a flowability of the raw material mixture better when granulating the same, so that the granulated material may be produced by such as non-humidification extrusion granulation.

Here, a fluororubber is known as a useable rubber for the friction material. Patent Document 3 (Japanese Provisional Patent Publication No. 2004-182870) discloses a non-asbestos friction material manufactured by forming and curing the non-asbestos friction material composition containing a fiber base, a binder, and a filler. The non-asbestos friction material is for an aluminum alloy rotor or drum, and the filler thereof contains 1-10 volume %, relative to the entire amount of the friction material composition, of an abrasive particle with an average particle diameter of 0.5 - 10µm and 4-20 volume % of the unvulcanized (uncrosslinked) rubber relative to the entire amount of the friction material composition. Here, the example of the unvulcanized (uncrosslenked) rubber is the fluororubber.

The fluororubber shows particularly low rebound resilience among all rubbers and is expected to provide an excellent brake noise suppression effect when adding the same in the underlayer composition.

However, if the underlayer composition containing the uncrosslinked fluororubber is used in the manufacturing method of softening the rubber by heating the same as disclosed in Patent Document 2, the flowability of the raw material mixture becomes insufficient, which creates a problem in manufacturing uniform quality products.

Therefore, the fluororubber has not been adopted as the rubber component to be added in the underlayer composition.

### [Prior Art(s)]

### [Patent Document(s)]

[Patent Document 1] Japanese Provisional Patent Publication No. 1993-331452
[Patent Document 2] Japanese Provisional Patent Publication No. 1995-301265
[Patent Document 3] Japanese Provisional Patent Publication No. 2004-182870

### [Summary of Invention]

### [Problems to be Resolved by Invention]

To provide an underlayer composition for a disc brake pad which is usable in a manufacturing process for heating and softening a rubber even if an uncrosslinked fluororubber is contained in the underlayer composition and to provide a disc brake pad using the above-described underlayer composition which presents an excellent brake noise suppression effect.

### [Means to Resolve Problems]

The problem that the flowability of the raw material mixture becomes insufficient, and manufacturing uniform quality product cannot be achieved when the above-described underlayer composition containing the uncrosslinked fluororubber is tired to be adopted to the manufacturing method for softening the rubber by heating is known to be happened because of crosslinking and curing of hexamethylenetetramine, which is added as a curing agent in the phenol-based resin as the binder of the underlayer composition, and the uncrosslinked fluororubber. Inventors of this invention completed this invention, after intensively examining the curing characteristics of the fluororubber, by utilizing the underlayer composition containing the specific amounts of the uncrosslinked fluororubber, the phenol resin, and the hexamethylenetetramine, the flowability of the rubber may be maintained, even though the manufacturing process that soften the rubber by heating, and manufacture a uniform quality product even if the uncrosslinked fluororubber is contained in the underlayer composition .

This invention relates to an underlayer composition for a disc brake pad and a disc brake pad manufactured using the underlayer composition, which is based on the following technology.
(1) The underlayer composition for a disc brake pad, which contains 5 - 15 weight % of the uncrosslinked fluororubber relative to the entire amount of the underlayer component, 4 - 8 weight % of the phenol-based resin as the binder relative to the entire amount of the underlayer component, and 0.3 - 2 weight % of the hexamethylenetetramine as the curing agent for the phenol-based resin relative to the entire amount of the underlayer composition.
(2) The underlayer composition according to the underlayer composition of (1) that does not contain a copper component.
(3) The disc brake pad having the underlayer which is molded the underlayer compositions according to (1) or (2) between the friction material and the back plate.

### [Advantage(s) of Invention]

This invention provides the underlayer composition for the disc brake pad, which may be applicable to the manufacturing process of softening the rubber by heating even if the uncrosslinked fluororubber is contained in the underlayer composition and the disc brake pad with excellent brake noise suppression effect.

### [Brief Explanation of Drawing(s)]

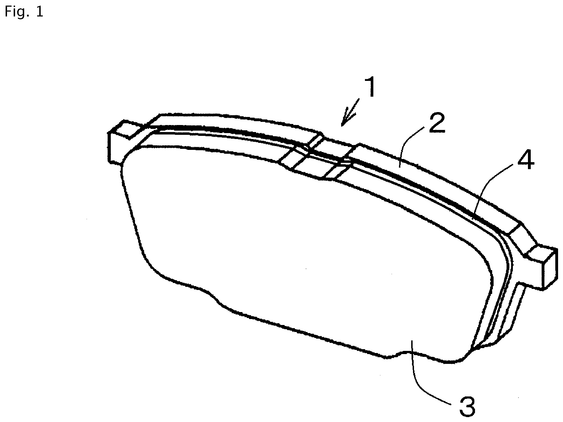

[FIG. 1] FIG. 1 is a perspective figure of the disc brake pad with respect to this invention.

### [Embodiment of This Invention]

### <Underlayer Composition>

The underlayer composition for the disc brake pad according to this invention contains 5 - 15 weight % of the uncrosslinked fluororubber relative to the entire amount of the underlayer component, 4 - 8 weight % of the phenol-based resin as the binder relative to the entire amount of the underlayer component, and 0.3 - 2 weight % of the hexamethylenetetramine as the curing agent for the phenol-based resin relative to the entire amount of the underlayer composition.

If the amount of the uncrosslinked fluororubber contained in the underlayer composition relative to the entire amount of the underlayer composition is less than 5 weight %, the brake noise suppression effect becomes insufficient, and if the amount of the uncrosslinked fluororubber contained in the underlayer composition relative to the entire amount of the underlayer composition is over 15 weight %, a blister occurs in the underlayer composition during the heat-press forming process, and a crack tend to occur at an interface between the friction material and the underlayer.

For the uncrosslinked fluororubber, a vinylidene fluorideseries (FKM), a tetrafluoro ethylenepropylene series (FEPM) and a tetrafluoro ethylene-perfluorovinyl ether series (FFKM) are listed, and the above-listed fluororubber is used alone or in a combination of two or more; however, in view of the heat-resistance, it is preferable to use a copolymer of a vinylidene fluoridehexafluoropropylene of the vinylidene fluoride series (FKM) alone.

A particulate and/or a block (so-called "bale" in the industry) uncrosslinked fluororubber may be used; however, in order to uniformly disperse the same in the underlayer composition, it is preferable to use a particulate uncrosslinked fluororubber and is preferable to use the particulate uncrosslinked fluororubber with an average particle diameter of 300 - 1500µm. As the particulate uncrosslinked fluororubber, Tecnoflon^{®} series by Solvay, S.A. and PPA series by Daikin Co., Ltd. may be used, and Tecnoflon^{®} by Solvay, S.A., may be used as the block uncrosslinked fluororubber.

If the amount of the phenol-based resin in the underlayer composition relative to the entire amount of the underlayer composition is less than 4 weight %, a shearing strength of the friction material and the back plate becomes insufficient, and if the amount of the phenol-based resin in the underlayer composition relative to the entire amount of the underlayer composition is over 8 weight %, the blister occurs in the underlayer composition in the heat-press forming process, and the cracking is likely to appear at the interface of the friction material and the underlayer composition.

The phenol-based resin includes a thermosetting phenol-based resin, which is normally used for the underlayer composition, such as a straight phenol resin, a cashew oil modified phenol resin, an acrylic rubber modified phenol resin, a silicon rubber modified phenol resin, a nitrile rubber (NBR) modified phenol resin, a phenol aralkyl resin (aralkyl modified phenol resin), a fluoropolymer dispersed phenol resin, and a silicon rubber dispersed phenol resin. The above-identified phenol-based resin may be used alone or in a combination of two or more.

If the amount of the hexamethylenetetramine relative to the entire amount of the underlayer composition is less than 0.3 weight %, the shearing strength of the friction material and the back plate becomes insufficient, and if the amount of the hexamethylenetetramine relative to the entire amount of the underlayer composition is over 2 weight %, the fluororubber crosslinks and is cured while the manufacturing process of softening the uncrosslinked fluororubber by heating, thereby making the flowability of the raw material mixture insufficient, which becomes an obstacle to obtain the final product with uniform quality.

The underlayer needs the strength, a rust prevention, and the minimum requied frictional braking effectiveness to stop an automobile when the friction material is completely worn out. Therefore, for the underlayer composition, in addition to the above-identified uncrosslinked fluororubber, the phenol-based resin, and the hexamethylenetetramine, the fiber base, the inorganic friction modifier, the organic friction modifier other than the uncrosslinked fuororubber, the pH adjuster, and the filler, and the lubricant may be added as necessary.

For the fiber base, organic fibers such as an aramid fiber, a cellulose fiber, a polypara-phenylene benzobisoxazole fiber, and an acrylic fiber are identified, and more metallic fibers such as a steel fiber, a stainless steel fiber, a copper fiber, a bronze fiber, a brass fiber, an aluminum fiber, an aluminum alloy fiber and a zinc fiber are identified. The above-identified fiber may be used alone or in a combination of two or more.

The amount of the fiber base contained in the underlayer composition relative to the entire amount of the underlayer composition is preferably 5 - 35 weight % and 10 - 25 weight % is more preferable.

For the inorganic modifier, particulate inorganic friction modifiers such as a talc, a clay, a dolomite, a mica, a vermiculite, a triiron tetroxide, a calcium silicate hydrate, a glass bead, a zeolite, a mullite, a chromite, a titanium oxide, a magnesium oxide, a stabilized zirconia, a monoclinic zirconium oxide, a zirconium silicate, γ -alumina, *α* -alumina, a silicate carbide, an iron particle, a copper particle, a bronze particle, a brass particle, an aluminum particle, an aluminum alloy particle, a zinc particle, and non-whisker-like (plate-like, columnar, squamous, irregular/amorphous shape having plurality of convex portions) titanate (potassium hexatitanate, potassium octatitanate, magnesium potassium titanate) are indentified, and more fiber based inorganic friction modifiers such as a wollastonite, a sepiolite, a basalt fiber, a glass fiber, a biosolubable artificial mineral fiber, and a rock wool are identified. The above-identified inorganic modifier may be used alone or in a combination of two or more.

The amount of the inorganic friction modifier relative to the entire amount of the underlayer composition is preferably 10 - 35 weight % and 15 - 30 weight % is more preferable.

For the organic friction modifier other than the above-uncrosslinked fluororubber, a cashew dust, a tire tread rubber pulverized powder, and vulcanized or unvulcanized rubber powder such as a tire tread rubber pulverized powder, a nitrile rubber, an acrylic rubber, a silicon rubber, and a butyl rubber are identified. The above-identified friction modifier may be used alone or in a combination of two or more.

The amount of the organic friction modifier contained in the underlayer composition relative to the entire amount of the underlayer composition together with the above-described uncrosslinked fluororubber is preferably 7 - 25 weight % and 10 - 20 weight % is more preferable.

The friction modifier may be pH adjuster such as the calcium hydroxide.

The amount of the pH adjuster relative to the entire amount of the underlayer composition is preferably 1 - 6 weight % and 2 - 3 weight % is more preferable.

As necessary, the lubricant may be added to the underlayer composition.

For lubricant, metallic sulfide based lubricants such as a molybdenum disulfide, a zinc sulfide, a tin sulfide, a bismuth sulfide, a tungsten sulfide, and a composite metal sulfide are identified, and carbon based lubricants such as an artificial graphite, a natural graphite, a flake graphite, an elastic graphite carbon, a petroleum coke, an active carbon, and a polyacrylonitrile oxide fiber pulverized powder are identified. The above-identified lubricants may be used alone or in a combination of two or more.

The amount of the lubricant when adding the same to the underlayer composition relative to the entire amount of the underlayer composition is preferably less than 8 weight % and less than 6 weight % is more preferable.

Remaining components of the underlayer composition may be the fillers such as the barium sulfide and the calcium carbonate.

Also, if a metallic copper such as a copper fiber and a copper particles is added to the underlayer composition containing the uncrosslinked fluororubber, the fluororubber may be deteriorated because the metallic copper promotes an auto-oxidation reaction of the fluororubber in the manufacturing process for softening the uncrosslinked fluororubber by heating.

Furthermore, because of the suggestion that the copper component contained in the disc brake pad may be ejected as the frictional wear powder which may flows into river, lake, and/or ocean, and causes an environmental pollution problem, it is not preferable to add the copper component in the underlayer composition.

### <Friction Material>

The friction material to be used in the disc brake pad of this invention is made from the fiber base, the binder, the lubricant, the inorganic friction modifier, the organic friction modifier, the pH adjuster, and the filler.

For the fiber base, organic fibers that are generally used in the friction material such as an aramid fiber, a cellulose fiber, a polyparaphenylene benzobisoxazole fiber, and an acrylic fiber are idenmtified, and metallic fibers that are generally used for the friction material such as a steel fiber, a stainless steel fiber, a copper fiber, a bronze fiber, a brass fiber, an aluminum fiber, an aluminum alloy fiber, and a zinc fiber are identified. The above-identified organic fibers or metallic fibers may be used alone or in a combination of two or more.

The amount of the fiber base contained in the friction material composition, relative to the entire amount of the friction material composition, is preferably 2-10 weight % and 3 - 15 weight % is more preferable.

For the binder, thermosetting resins that are generally used for the friction material such as a straight phenol resin, a cashew oil modified phenol resin, an acrylic rubber modified phenol resin, a silicon rubber modified phenol resin, a nitrile rubber (NBR) modified phenol resin, a phenol aralkyl resin (aralkyl modified phenol resin), a fluoropolymer dispersed phenol resin, and a silicone rubber dispersed phenol resin are identified. The above-identified thermosetting resins may be used or a combination of two or more.

The amount of the binder contained in the friction material composition, relative to the entire amount of the friction material composition, is 7 - 15 weight % and 8 - 12 weight % is preferable.

For the lubricant, metallic sulfide based lubricants such as molybdenum disulfide, zinc sulfide, tin sulfide, bismuth sulfide, tungsten sulfide, and composite metal sulfide are identified, and carbon based lubricants such as an artificial graphite, a natural graphite, a flake graphite, an elastic graphite carbon, a petroleum coke, an active carbon, and a polyacrylonitrile oxide fiber pulverized powder are identified The above-identified lubricants may be used alone or in a combination of two or more.

The amount of the lubricant contained in the friction material composition, relative to the entire amount of the friction material composition, is 3 - 8 weight % and 4 - 6 weight % is more preferable.

For the inorganic modifier, particulate inorganic friction modifiers that are generally used in the friction material composition such as the talc, the clay, the dolomite, the mica, the vermiculite, the triiron tetroxide, the calcium silicate hydrate, the glass bead, the zeolite, the mullite, the chromite, the titanium oxide, the magnesium oxide, the stabilized zirconia, the monoclinic zirconium oxide, the zirconium silicate, γ -alumina, *α* -alumina, the silicon carbide, the iron particles, the copper particles, the bronze particles, the brass particles, the aluminum particles, the aluminum alloy particles, the zinc particles, and non-whisker-like (plate-like, columnar, squamous, irregular/amorphous shape having plurality of convex portions) titanate (potassium hexatitanate, potassium octatitanate, magnesium potassium titanate) are identified, and the fiber based inorganic friction modifiers that are generally used in the friction material composition such as the wollastonite, the sepiolite, the basalt fiber, the glass fiber, the biosolubable artificial mineral fiber, and the rock wool are identified The above-identified fibers may be used alone or in a combination of two or more.

The amount of the inorganic friction modifier contained in the friction material composition, relative to the entire amount of the friction material composition, is 30 - 70 weight % and 40 - 60 weight % is more preferable.

For the organic friction modifier, organic friction modifiers that are generally used in the friction material such as the cashew dust, the tire tread rubber pulverized powder, vulcanized or the unvulcanized rubber such as the nitrile rubber, the acrylic rubber, the silicone rubber, and the butyl rubber are identified. The above-identified friction modifier may be used alone or in a combination of two or more.

The amount of the organic friction modifier contained in the friction material composition, relative to the entire amount of the friction material composition, is preferably 3 - 8 weight % and 4 - 7 weight % is more preferable.

As the pH adjuster, the pH adjuster that are generally used in the friction material such as the calcium hydroxide may be used.

The amount of the pH adjuster contained in the friction material composition, relative to the entire amount of the friction material composition, is preferably 1- 6 weight % and 2 - 3 weight % is more preferable.

For the remaining components of the friction material composition, the fillers such as the barium sulfide and the calcium carbonate may be used.

Also, because of the suggestion that the copper component contained in the disc brake pad may be ejected as the frictional wear powder which may flows into river, lake, or ocean, and causes an environmental pollution problem, it is not preferable to add the copper component in the friction material composition.

### <Manufacturing Method for Disc Brake Pad Using Underlayer Composition of This Invention>

### <Underlayer Composition Preparation>

### (1-1) Mixing Process

The underlayer composition is fed into a mixer such as Loedige mixer and Eirich mixer, and stirred and mixed until uniformly dispersed to obtain the raw underlayer material mixture.

### (1 - 2) Granulation Process, Kneading Process

After the mixing process, a granulation process with a heating step or a kneading process with a heating step is added.

Through the granulation process or the kneading process, handlings of the materials in the subsequent process thereafter may be facilitated and generation of the powder dust during the operation is reduced.

### (1-2-1) Granulation Process

The raw underlayer material mixture is fed into a disk pelleter described in Patent Document 2 (Japanese Provisional Patent Publication No. 1995-301265). As heating the raw underlayer material mixture to the temperature of softening the unvulcanized fluororubber, the raw underlayer material mixture is pressed to be extruded from an extrusion hole on an extrusion plate, and the extruded mixture is finely cut to obtain the raw granulated underlayer material.

### (1- 2 - 2) Kneading Process

An internal mixer (hereafter "closed-kneader") to be used here has a kneading chamber to keep the raw underlayer material mixture therein, a pressure lid to close an upper portion of the kneading chamber, a pair of rotors positioned in the kneading chamber, and a temperature control device to control the temperature in the kneading chamber. The raw underlayer material mixture is fed into the closed kneader, and the raw underlayer material mixture is kneaded under pressure while heating to a temperature at which the unvulcanized fluororubber softens to obtain the kneaded raw underlayer material. If there is a cluster in the kneaded raw underlayer material obtained through the kneading process, a sizing process, in which the obtained kneaded raw underlayer material is fed into a mixer such as Loedige mixer and Eirich mixer and is stirring and mixing until any cluster is removed, may be added.

### <Friction Material Composition Preparation>

### (2 - 1) Mixing Process

The friction material composition is fed into a mixer such as Loedige mixer and Eirich mixer and stirred and mixed until uniformly dispersed to obtain the raw friction material mixture.

### (2 - 2) Granulation Process, Kneading Process

Just like the underlayer composition as described above, after the mixing process, a granulation process with a heating step or a kneading process with a heating step is added.

Through the granulation process or the kneading process, handlings of the materials in the subsequent process thereafter may be facilitated and generation of the powder dust during the operation is reduced.

### <Pre-Forming Process>

The prepared friction material composition (i.e., the raw friction material mixture, the granulated raw friction material, or the kneaded raw friction material) and the prepared underlayer composition (i.e., the granulated raw underlayer material or the kneaded raw underlayer material) are fed into a pre-forming die and the pre-forming process is performed to obtain a pre-formed product.

Here, this pre-forming process may be skipped and the later described heat-press forming process may be performed instead.

### <Heat-Press Forming Process>

The back plate, which is pre-washed, surface treated, and adhesive coated, and the pre-formed product are superposed to be set in a heat-press forming die. Then, a press machine is used to heat-press the pre-formed product at 140 - 200 centigrade under the forming pressure of 20 - 80 MPa for about 1 - 10 minutes to obtain a molded product.

If the pre-forming process is skipped, the prepared friction material composition (i.e., the raw friction material mixture, the granulated raw friction material substance, or the kneaded raw friction material substance) and the prepared underlayer composition (i.e., the granulated raw underlayer substance or the kneaded raw underlayer substance) in order are fed into the heatforming die.

### <Heat Treatment Process>

The molded product is heated in the heat treating furnace at 180 - 250 centigrade to complete the curing reaction of the phenol-based resin as the binders contained in both of the friction material and the underlayer.

### <Grinding Process>

A grinder with a grinding stone is used to grind a surface of the friction material to form a friction surface.

### <Other Process(s)>

As appropriate, a coating process, a coating baking process, a slit and chamfer forming process, and a scorching process may be performed.

The coating process can be performed before the heat-treatment process, and the coating baking process and the heat-treatment process may be performed simultaneously.

### [Example(s)]

### in the following sections, the examples and the comparative examples are explained concretely; however, this invention is not limited to the following examples.

### < Underlayer Composition Preparation>

The each underlayer composition having each composition of Examples 1-7 and Comparative Examples 1 - 7 as shown in Table 1 was fed into Loedige mixer and mixed for about 5 munities to obtain the each raw underlayer material mixture.

Here, the uncrosslinked fluororubber is identified as the organic friction modifier.

**[Table 1]**

| | | Embodiments | | | | | | | Comparative Examples | | | | | | |
|---|---|---|---|---|---|---|---|---|---|---|---|---|---|---|---|
| | | 1 | 2 | 3 | 4 | 5 | 6 | 7 | 1 | 2 | 3 | 4 | 5 | 6 | 7 |
| binder | straight phenol resin | 6.0 | 6.0 | 6.0 | 6.0 | 6.0 | 4.0 | 8.0 | 6.0 | 4.0 | 3.0 | 6.0 | 9.0 | 8.0 | 6.0 |
| phenol resin curing agent | hexamethyle netetramine | 0.5 | 0.5 | 0.5 | 0.5 | 0.5 | 0.3 | 2.0 | 0.5 | 0.2 | 0.3 | 0.5 | 2.0 | 2.5 | 0.5 |
| fiber base | steel fiber | 18.0 | 18.0 | 18.0 | 18.0 | 18.0 | 18.0 | 18.0 | 18.0 | 18.0 | 18.0 | 18.0 | 18.0 | 18.0 | 18.0 |
| | aramid fiber | 6.0 | 6.0 | 6.0 | 6.0 | 6.0 | 6.0 | 6.0 | 6.0 | 6.0 | 6.0 | 6.0 | 6.0 | 6.0 | 6.0 |
| inorganic friction modifier | phlogopite | 6.0 | 6.0 | 6.0 | 6.0 | 6.0 | 6.0 | 6.0 | 6.0 | 6.0 | 6.0 | 6.0 | 6.0 | 6.0 | 6.01 |
| | triiron tetroxide | 6.0 | 6.0 | 6.0 | 6.0 | 6.0 | 6.0 | 6.0 | 6.0 | 6.0 | 6.0 | 6.0 | 6.0 | 6.0 | 6.0 |
| organic friction modifier | particulate unvulcanized fluororubber (PPA DA-3105T manufactured by DAIKIN INDUSTRIES, LTD. | 5.0 | 8.0 | 10.0 | 12.0 | 15.0 | 10.0 | 10.0 | 3.0 | 10.0 | 10.0 | 17.0 | 10.0 | 10.0 | 0.0 |
| | particulate unvulcanized acrylonitrile-butadiene rubber | 0.0 | 0.0 | 0.0 | 0.0 | 0.0 | 0.0 | 0.0 | 0.0 | 0.0 | 0.0 | 0.0 | 0.0 | 0.0 | 12.0 |
| pH adjuster | calcium hydroxide | 2.0 | 2.0 | 2.0 | 2.0 | 2.0 | 2.0 | 2.0 | 2.0 | 2.0 | 2.0 | 2.0 | 2.0 | 2.0 | 2.0 |
| filler | barium sulfide | 50.5 | 47.5 | 45.5 | 43.5 | 40.5 | 47.7 | 42.0 | 52.5 | 47.8 | 48.7 | 38.5 | 41.0 | 41.5 | 43.5 |
| Total (weight %) | | 100.0 | 100.0 | 100.0 | 1000 | 100.0 | 100.0 | 100.0 | 100.0 | 100.0 | 100.0 | 100.0 | 100.0 | 100.0 | 100.0 |

The each underlayer composition of Examples 1-7 and Comparative Examples 1 - 7was fed into the closed-kneader that has the kneading chamber to keep the raw underlayer material mixture therein, the pressure lid to close the upper portion of the kneading chamber, the pair of rotors positioned in the kneading camber, and the temperature control device to control the temperature in the kneading chamber, and the underlayer composition was kneaded under the below-described kneading conditions to obtain the each kneaded raw underlayer material.

### <Kneading Conditions>

Kneading Chamber Temperature: 80 centigrade
Pressure of Pressure Lid: 0.5MPa
Kneading Time: 180 seconds

### <Evaluation of Kneaded State of Kneaded Raw Underlayer Material>

The states of the obtained kneaded raw underlayer materials were evaluated based on the following evaluation standard.

### <Evaluation Standard of Kneaded Stare of Kneaded Raw Underlayer Material>

Pass: No defective kneading due to curing of the uncrosslinked fluororubber
Fail: Defective kneading due to curing of the uncrosslinked fluororubber

### Evaluation Results are shown in Table 2.

**[Table 2]**

| | | Embodiments | | | | | | | Comparative Examples | | | | | | |
|---|---|---|---|---|---|---|---|---|---|---|---|---|---|---|---|
| | | 1 | 2 | 3 | 4 | 5 | 6 | 7 | 1 | 2 | 3 | 4 | 5 | 6 | 7 |
| Evaluation Result | Kneading Condition | P | P | P | P | P | P | P | P | P | P | P | P | P | P |

| | | | | | | | | | | | | | | | |
|---|---|---|---|---|---|---|---|---|---|---|---|---|---|---|---|
| P = Pass F = Fail | | | | | | | | | | | | | | | |

In the next, the each kneaded raw underlayer material of Examples 1-7 and Comparative Examples 1-5 and 7 with the evaluation result of kneading state showing "Pass" was fed into Loedige mixer and mixed for about 5 munities to sizing to obtain each sizing kneaded raw underlayer material.

### < Friction Material Composition Preparation>

Each friction material composition having the composition shown in Table 3 was fed into the Loedige mixer and mixed for about 5 munities to obtain the raw friction material mixture.

**[Table 3]**

| | | |
|---|---|---|
| binder | straightphenolresin-hexamethylenetetramine | 8.0 |
| fberbase | aram id fiber | 3.0 |
| lubricant | molybdenum disulfide | 1.0 |
| | graphite | 3.0 |
| inorganic friction modifier | phlogopite | 5.0 |
| | zirconum silicate | 3.0 |
| | monoclinic zirconium oxide | 20.0 |
| | potassium hexatitanate (irregular/am arphous shape having plurality of convex portions) | 20.0 |
| organic friction modifier | cashew dust | 5.0 |
| | tire tread rubber pulverized powder | 2.0 |
| pH adjuster | calcium hydroxide | 3.0 |
| filler | barium sulfide | 27.0 |
| total (weight%) | | 100.0 |

### <Heat-Press Forming Process>

Each raw friction material mixture, or the each kneaded raw underlayer material shown in Examples 1 - 7 and Comparative Examples 1 - 5 and 7, and the steel back plate, which was pre-washed, surface treated, and adhesive coated were superposed to be set in a heat-press forming die, and were heat-press formed at 160 centigrade under the forming pressure of 30 MPa for about 5 minutes to obtain a friction material molded material.

### <Heat-Treatment Process - Finishing Process>

The friction material molded product was heat-treated to be cured in the heat-treating furnace at 200 centigrade for about 3 hours, and was processed through the coating, baking, and grinding to produce each disc brake pad shown in Examples 1- 7 and Comparative Examples 1 - 5 and 7.

### <Evaluation>

In the next, the disc brake pads of Examples 1-7 and Comparative Examples 1-5 and 7, which were manufactured through the above-described processes, were evaluated as to the product appearance, the shearing strength, and the brake nose.

### < Evaluation of Product Appearance>

The appearance of the obtained disc brake pads were evaluated based on the following evaluation standard.

### <Evaluation Standard of Product Appearance>

Pass: No cracking at the interface of the friction material and the underlayer
Fail: Cracking at the interface of the friction material and the underlayer

### <Evaluation of Shearing Strength>

The shearing strength of the disc brake pads, which is in Examples 1 - 7 and Comparative Examples 1- 3 and 7 showing "Pass" in the evaluation result for the product appearance, was evaluated based on JIS D4422 (Automotive Parts - Drum Brake Shoe Assemblies and Disc Brake Pad - Shear Test Procedure), in which the disc brake pads were pressed at the crosshead speed of 10mm/minute to completely destroy the same, and the maximum load at the time of the destruction was measured to evaluate by the following evaluation standard.

### <Evaluation Standard of Sharing Strength>

Excellent: 40kN or more
Good: 30kN or more but less than 40kN
Pass: 18kN or more but less than 30kN
Fail: less than 18kN
-: No evaluation due to defective product appearance

### <Evaluation of Brake Noise>

The brake pads with "Excellent", "Good" or "Pass" with respect to the shearing strength evaluation in Examples 1-7 and Comparative Examples 1 and 7 were set on the actual passenger cars, and the brake noise test was performed based on JASO C402 (Passenger Cars - Service Brake Road Test Procedures) to evaluate the following evaluation standard.

### <Evaluation Standard for Brake Noise>

Brake Noise Generation Raito (%) = No. of times of the brake noise with 70dB or more occurs / no. of braking × 100
Excellent: 0%
Good: More than 0% but less than 5%
Pass: 5% or more but less than 10%
Fail: 10% or more
-: No evaluation due to the failing result of the evolution of the sharing strength

### <Evaluation Results>

The results of above-evaluation are shown in Table 4.

Here, the kneading states in Table 4 are repetition of Table 2.

**[Table 4]**

| | | Embodiments | | | | | | | Comparative Examples | | | | | | |
|---|---|---|---|---|---|---|---|---|---|---|---|---|---|---|---|
| | | 1 | 2 | 3 | 4 | 5 | 6 | 7 | 1 | 2 | 3 | 4 | 5 | 6 | 7 |
| Evaluation Result | keading condition | P | P | P | P | P | P | P | P | P | P | P | P | F | P |
| | product apparance | P | P | P | P | P | P | P | P | P | P | F | F | - | P |
| | shearing strength | E | E | E | E | E | P | E | G | F | F | - | - | - | E |
| | brake noise | P | G | E | E | E | E | G | F | - | - | - | - | - | F |

| | | | | | | | | | | | | | | | |
|---|---|---|---|---|---|---|---|---|---|---|---|---|---|---|---|
| E = Excellent G=Good P = Pass F = Fail | | | | | | | | | | | | | | | |

### [Industrial Applicability]

According to this invention, sufficient rubber flowability may be secured and maintained even after the manufacturing process to soften the rubber even if the uncrosslinked fluororubber is contained in the underlayer composition, and the disc brake pad with uniform product quality may be provided. Therefore, this invention may provide the disc brake pad with excellent brake noise suppression effect and offer very high practical value.

### [Explanation of Reference Numerals]

1. disc brake pad
2. back plate
3. friction material
4. underlayer

## Claims

1. An underlayer composition for a disc brake pad, containing, relative to the entire amount of the underlayer composition,
5-15 weight % of an uncrosslinked fluororubber,
4 - 8 weight % of a phenol-based resin as a binder, and
0.3 - 2 weight % of hexamethylenetetramine as a curing agent for the phenol-based resin.

2. The underlayer composition for a disc brake pad according to Claim 1, wherein
the underlayer composition does not include a copper component.

3. A disc brake pad having an underlayer, which is formed by the underlayer composition according to Claims 1 or 2, between a friction material and a back plate.

## Patentansprüche

1. Unterschichtzusammensetzung für einen Scheibenbremsbelag, die, im Verhältnis zur Gesamtmenge der Unterschichtzusammensetzung,
5 - 15 Gewichts-% eines unvernetzten Fluorkautschuks,
4 - 8 Gewichts-% eines phenolbasierten Harzes als Bindemittel, und
0,3 - 2 Gewichts-% Hexamethylentetramin als Aushärtungsmittel für das phenolbasierte Harz, enthält.

2. Unterschichtzusammensetzung für einen Scheibenbremsbelag nach Anspruch 1, wobei die Unterschichtzusammensetzung keine Kupferkomponente enthält.

3. Scheibenbremsbelag mit einer Unterschicht, die aus der Unterschichtzusammensetzung nach Anspruch 1 oder 2 zwischen einem Reibmaterial und einer Trägerplatte gebildet ist.

## Revendications

1. Composition de sous-couche pour une plaquette de frein à disque, contenant, en proportion de la quantité totale de la composition de sous-couche,
5 - 15 % en poids d'un caoutchouc fluoré non réticulé,
4 - 8 % en poids d'une résine à base de phénol comme liant, et
0,3 - 2 % en poids d'hexaméthylènetétramine comme agent de durcissement de la résine à base de phénol.

2. Composition de sous-couche pour une plaquette de frein à disque selon la revendication 1, où la composition de sous-couche ne comprend pas de composant de cuivre.

3. Plaquette de frein à disque comprenant une sous-couche formée à partir de la composition de sous-couche selon la revendication 1 ou 2 entre un matériau de friction et une plaquette de support.
